Europäisches Patentamt

European Patent Office

Office européen des brevets

(19)

(11) **EP 0 965 598 A1**

(12) **EUROPEAN PATENT APPLICATION**

(43) Date of publication:
**22.12.1999 Bulletin 1999/51**

(51) Int Cl.⁶: **C08F 2/24**, C09D 157/00

(21) Application number: **98111077.8**

(22) Date of filing: **17.06.1998**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **HERCULES INCORPORATED**<br>**Wilmington Delaware 19894-0001 (US)**<br><br>(72) Inventors:<br>• **Salomons, Willemien**<br>**3330 AB Zwijndrecht (NL)** | • **Hofman, Hans**<br>**3330 AB Zwijndrecht (NL)**<br><br>(74) Representative: **Best, Michael, Dr. et al**<br>**Lederer, Keller & Riederer**<br>**Patentanwälte**<br>**Prinzregentenstrasse 16**<br>**80538 München (DE)** |

(54) **New protective colloids in latices with improved film formation at low temperatures**

(57)     The present invention provides an emulsion polymerization process comprising polymerizing a monomer composition on the basis of ethylenically unsaturated monomers in the presence of water and of at least one protective colloid. The protective colloid is chosen so that the difference between the glass transition temperature and the minimum film formation temperature of the emulsion polymerized product is significantly increased compared to emulsion polymerization products produced with conventional protective colloids.

## Description

Film formation is one of the most important properties of a latex. It is a key function when a latex is applied in paints and adhesives. Improper film formation at the application temperature will result in a poor performance of the paint or adhesive.

Film formation is dependent on the nature of the latex, temperature and humidity of the environment and the substrate.

There are many theories about film formation and the factors that are of influence.

Most of the theories divide the process in three steps:

I. evaporation of water, latex particles come in close contact

II. after all water has evaporated, the latex particles start to deform and form a three-dimensional hexagonal-like structure (coalescence)

III. polymer molecules in the particles penetrate into other particles (auto-hesion, interdiffusion)

For phase I the humidity of the air is an important parameter.

For stage II the minimum film formation temperature (MFT) of the latex is crucial. The MFT in combination with the ambient temperature will determine if the deformation takes place or not. The essence of coalescence is to have (sufficient) mobility of the latex polymer.

For auto-hesion (stage III) the mobility of the polymer (i.e., glass transition temperature (Tg) combined with the ambient temperature) is even more crucial. Interdiffusion will give strength to the polymer film.

In general the forces leading to film formation are defined as (Prog. Org. Coat. 23, 387 (1994); Trends Polym. Sci. 4, 145 (1996); Surface Coatings. Vol I. Raw Materials and their Usage, Chapman & Hall 1993, page 325-331):

*promotion of film formation:*

* van der Waals attraction
* gravity
* surface energy, from thermodynamic standpoint it is favorable to have minimal interfacial area.
* capillary forces
* increase in conformational entropy by diffusion of polymer chains.
* compression work due to evaporation of water (added by Sheetz)

*resisting film formation:*

* electrostatic repulsion
* steric repulsion
* resistance to elastic or viscous deformation (moduli of the latex polymer)

In some literature the smaller particle size of the dispersion is also mentioned as lowering the MFT (J. Coat. Techn. 68, 63 (1996); J. Appl. Pol. Sci. 42, 2845, 1991), this is usually explained by a smaller diameter of the capillaries between the particles, and higher packing density of the latex particles. Other (Langmuir 10, 2619 (1994)) state that the influence of the particle size finds its origin in the time-scale which was chosen. Interstitial voids will be larger of a latex with a larger particle size, and it will take longer for them to disappear.

Many methods have been described to influence the film formation. With the current need for low VOC coatings and the ability to be applied at approximately 0°C, many attempts have been made to combine these demands.

One of the possibilities is found in regular decorative application, in which it is custom to use a coalescing agent, which improves the film formation at low temperatures. However, with the trend for going to eliminate all solvents in various applications, there is a need for a latex binder which already forms a film at low temperatures, without the need for coalescing agents.

This can be easily achieved by changing the composition of the binder (i.e., lower the glass transition temperature of the latex binder to beneath the application temperature) (US-A 5,346,948; US-A 5,367,018). However, a major problem occurring in this case is the tendency to have much blocking. If the glass transition temperature of the latex is below room temperature, the polymer is in its rubbery state in normal conditions, and will be tacky and will give easy dirt pick-up.

Film formation in coatings is often improved by the addition of

* plasticizers (a relatively non-volatile organic liquid that dissolves in the polymer to reduce its hardness)
* cosolvents (an organic liquid that is an aid to dissolving a polymer in water) and
* coalescents (a temporary plasticizer that aids film formation before it evaporates to leave a harder film) (European Coatings J., 96 (10), 720-730 (1996)).

For plasticizing a polymer, compatibility of the additive and the bulk polymer is required. Absorbed water can also act as a plasticizer. Usual plasticizers comprise low molecular weight polymers or oligomers. These additives are not volatile and will not contribute to VOC, but they will remain in the final polymer film, and will result in a lower glass transition temperature of the polymer film compared to the unplasticized film.

Another way of plasticization is to add organic esters, containing a central polar segment and oily substituents. The oily substituents will give the plasticizer action. Because of their low molecular weight, they are more likely to be volatile or extractable (European Coatings J., 96 (10), 720-730 (1996)).

Incorporation of the plasticizer may be troublesome, the plasticizer may float to the surface, and sometimes the plasticizer need to be pre-emulsified in water before addition to the coating composition. This requires another need for surfactant to emulsify the plasticizer and will contribute to more surfactant in the final coating. Again, this extra amount of surfactant may cause problems with viscosity stability, flocculation of pigment etc. An assumption that is lying underneath the reasoning is that the plasticizer is indeed incorporated in the polymer matrix.

Cosolvents change the drying by speeding up the evaporation of water via an azeotrope, and enforce the capillary pressure, or by slowing the drying by leaving the film later than water does. The cosolvent will keep the polymer particles from merging until the system is almost completely dry. Another function of the cosolvent may be to improve the water swelling of the binder.

Both cosolvents and coalescing agents are generally derived from ethylene glycol (ethers and esters), they do contribute to VOC and can be toxic as well (European Coatings J., 96 (10), 720-730 (1996)).

Surfactants used in the latex preparation are also known to influence the film formation. Eckersley and Rudin observed a reduction in the modulus of the latex polymer when nonylphenolethoxylated surfactant was added. This indicates plasticization. Nevertheless this did not result in a lower MFT most probably because of a reduction in the interfacial energy of the system. This reduction (in interfacial energy) is opposing film formation (J. Appl. Pol Sci. 48, 1369 (1993)).

In a comparison between different ethoxylated nonionic surfactants, Vandezande and Rudin observed a plasticization of the polymer with ethoxylated alkylphenol nonionic surfactants. They observed an increase both in MFT and in glass transition temperature when using ethoxylated alkylphenol nonionic surfactants of higher ethoxylation, indicating that the lowest ethoxylated nonionics plasticize better (J. Coat. Tech. 68, 63 (1996)).

The following table 1 shows that by simply adding a coalescent, or plasticizer, the film formation temperature may indeed be lowered. However, at the same time the glass transition temperature is drastically lowered. The differences between Tg and MFT become smaller as more coalescent or plasticizer is added. Also an effect of the length of the ethyleneoxide chain can be observed if nonionic surfactants are added. The larger the ethoxylate chain, the least effective the nonionic is for lowering the MFT. This can be explained by the more polymeric nature of the higher ethoxylated nonionic surfactants, which is also expressed by a higher melting point of these surfactants.

Table 1:

| Influence of nonionic surfactant and polyethyleneglycols added to a vinylacetate-VeoVa latex stabilized with a protective colloid of the invention | | | | |
|---|---|---|---|---|
| Additive | Concentration (Wt% on latex) | MFT (°C) | Tg (°C) | Delta (Tg-MFT) |
| none | - | 11.3 | 27 | 15.7 |
| NP4 | 1 | 12 | 25 | 13 |
| NP4 | 2 | 8.6 | 20.8 | 12.2 |
| NP4 | 5 | 7.5 | 14 | 6.5 |
| NP10 | 1 | 12.8 | 24.4 | 11.6 |

Table 1: (continued)

| Influence of nonionic surfactant and polyethyleneglycols added to a vinylacetate-VeoVa latex stabilized with a protective colloid of the invention | | | | |
|---|---|---|---|---|
| Additive | Concentration (Wt% on latex) | MFT (°C) | Tg (°C) | Delta (Tg-MFT) |
| NP10 | 2 | 12.1 | 21 | 8.9 |
| NP10 | 5 | 10.3 | 14.1 | 3.8 |
| NP20 | 1 | 13.9 | 23.9 | 10 |
| NP20 | 2 | 12.2 | 17 | 4.8 |
| NP20 | 5 | 13.7 | 13.1 | 0 |
| PEG 8000 | 1 | 13.9 | 26 | 12.9 |
| PEG 8000 | 2 | 13.6 | 22.7 | 8.9 |
| PEG 8000 | 5 | 15.3 | 21.4 | 6.1 |
| PEG 15000 | 1 | 13.8 | 26.1 | 12.3 |
| PEG 15000 | 2 | 14.5 | 21.8 | 7.3 |
| PEG 15000 | 5 | 15.4 | 20.6 | 6.1 |
| NP4 = nonylphenolethoxylate with four ethyleneoxide chains NP10 = nonylphenolethoxylate with ten ethyleneoxide chains NP20 = nonylphenolethoxylate with 20 ethyleneoxide chains. | | | | |

Nonionic surfactants have been observed to enhance the interdiffusion rate, most probably due to plasticizing the polymer, thereby effectively lowering its Tg and yielding an increase in interdiffusion rate. Anionic surfactants are found to give the opposite effect: by remaining in the particle boundaries and interstitial regions as a barrier to interdiffusion, it decreases the interdiffusion rate (Polym. Mat. Sci. Eng. 73, 8 (1995)).

Water has been a known plasticizer as well (J. Coat. Tech. 68, 63 (1996); Langmuir 10, 2619 (1994); J. Appl. Pol Sci. 48, 1369 (1993); J. Pol. Sci. Pol. Phys. 33, 1395 (1995)). This is especially applicable for hydrophilic polymers. Also the hydrophilic shell of core-shell polymers can be plasticized by water.

Two-stage or core-shell polymerization is another technique to ensure film formation at reasonable low temperature while maintaining a relatively high Tg (US-A 4,455,402). The use of coalescing agents is in these latices limited since the hydrophobic coalescents diffuse into the hydrophobic core and cannot contribute to the film formations. For these systems the coalescing agent should be hydrophilic (L.S. Smith: Predicting cosolvent efficiency for coalescing latex films. Water-borne & higher-solids Coatings Symposium, Feb 25-27, 1987, page 104, New Orleans, USA).

Also blends of latices are known to be able to combine a low MFT with a relatively high Tg (EP 0 466 409 A1; EP 0 118 252 A1).

One patent describes the use of degraded starch as protective colloid in all-acrylic latices wherein the MFT is not increased by the protective colloid, but blocking resistance is improved. No explanation is given for this phenomenon (DE-A 26 59 133).

It is therefore an object of the present invention to provide a latex composition which does not exhibit the problems of the prior art compositions. In particular, a latex composition should be provided which has a sufficiently low minimum film formation temperature (MFT) for practical purposes and which nevertheless has a sufficiently high glass transition temperature to avoid problems which usually occur if the glass transition temperature is too low (tendency of blocking in latex coating compositions).

It is a further object of the present invention to significantly increase the difference between the glass transition temperature and the minimum film formation temperature of a latex, whereby the amount of VOCs in the latex and during the latex formation process is not increased but preferably is even decreased compared to prior art processes.

It is a further object of the present invention to overcome problems associated with prior art latices and processes for their production.

These objects are achieved based on the unexpected finding that carrying out an emulsion polymerization of a monomer mixture which contains at least one kind of ethylenically unsaturated monomer and a specific protective colloid results in a polymer product which, when used as a latex coating composition, has a significantly reduced MFT while the glass transition temperature of the polymer of the latex composition is not lowered.

The present invention therefore provides in one embodiment an emulsion polymerization process comprising polymerizing a monomer composition on the basis of ethylenically unsaturated monomers in the presence of water and of at least one protective colloid preferably selected from the group consisting of hydroxyethylcellulose, ethylhydroxyethylcellulose, hydrophobically modified hydroxyethylcellulose, carboxymethylcellulose, carboxymethyl hydroxyethylcellulose, methyl hydroxypropylcellulose, methyl hydroxyethylcellulose, methylcellulose, sulfo-ethylated hydroxyethylcellulose, hydroxypropyl-hydroxyethylcellulose and sulfo-ethylated carboxymethylcellulose and mixtures of these protective colloids, characterized in that the protective colloid is selected such that the difference between the minimum film formation temperature and the glass transition temperature of the product of the emulsion polymerization is

10°C or more, if the monomer composition comprises at least 50% of vinylacetate and at least 15% of vinylversatate,

15°C or more, if the monomer composition comprises at least 50% of vinylacetate and at least 5% of ethylene,

15°C or more, if the monomer composition comprises at least 50% of vinylacetate and at least 5% of butylacrylate, ethylhexylacrylate and/or butyl-methacrylate and

5°C or more for all other monomer compositions.

In a further embodiment, the present invention provides an emulsion polymerization process comprising polymerizing a monomer composition on the basis of ethylenically unsaturated monomers in the presence of water and of at least one protective colloid preferably selected from the group consisting of hydroxyethylcellulose, ethylhydroxyethylcellulose, hydrophobically modified hydroxyethylcellulose, carboxymethylcellulose, carboxymethyl hydroxyethylcellulose, methyl hydroxypropylcellulose, methyl hydroxyethylcellulose, methylcellulose, sulfo-ethylated hydroxyethylcellulose, hydroxypropyl-hydroxyethylcellulose and sulfo-ethylated carboxymethylcellulose and mixtures of these protective colloids, characterized in that the protective colloid is selected such that the glass transition temperature and the minimum film formation temperature of the product of the emulsion polymerization meet the following relationship, formula (I):

$$(T_G - MFT)_p - (T_G - MFT)_{np} \geq 2°C \tag{I}$$

wherein

p = emulsion polymerized product produced with protective colloid

np = emulsion polymerized product produced without protective colloid

$T_G$ = glass transition temperature of the emulsion polymerized product

MFT = minimum film formation temperature of the emulsion polymerized product

Preferably, the emulsion polymerization process according to the present invention meets both requirements, namely

requirement 1: which is that the difference between the minimum film formation temperature and the glass transition temperature of the product of the emulsion polymerization process has a specific minimum value depending on the specific latex as defined above and

requirement 2: formula (I) as defined above.

The present invention furthermore provides the emulsion polymerized products as defined above as well as latex compositions, in particular latex coating compositions comprising these products. The present invention furthermore provides products coated with the latex coating compositions as defined above.

Very important for the present invention is the protective colloid which is used in the emulsion polymerization of the monomer composition. It was found that the protective colloid can be selected such that the polymer product obtained by emulsion polymerization has a lowered minimum film formation temperature (MFT) but nearly an unchanged glass transition temperature, which leads to a high difference between the MFT and the glass transition temperature. Therefore it is possible to provide latex coating compositions which have a reasonably high glass transition temperature so that blocking tendencies in the composition are reduced while the minimum film formation temperature of the latex coating composition is sufficiently low to apply the composition at very low temperatures according to the modern techniques. Furthermore, in these latex compositions the VOC content can be reduced.

Which particular protective colloid should be selected depends on the actual case an on the type of ethylenically unsaturated monomer which is polymerized in the emulsion polymerization process.

The protective colloid is generally selected from the group consisting of polysaccharides, in particular ethoxylated starch derivatives, poly(acrylic acid) and salts thereof, in particular the alkali metal salts thereof, partially and fully hydrolyzed poly(vinylalcohol), polyacrylamide, poly(vinyl pyrrolidone), poly(vinyl ethers), gelatine, casein, poly(methyl vinylether-maleic anhydride), water soluble starch glue, water soluble alginates, agar, and neutral and synthetic gums and derivatives and mixtures of the group. The protective colloids contain a plasticizing substituent and by adjusting the amount and identity of the plasticizing substituent protective colloids can be prepared which when used in an emulsion polymerization process according to the present invention result in a polymerization product which has the required high difference between the minimum film formation temperature and the glass transition temperature.

As a general rule it can be stated that if a specific protective colloid having a plasticizing substituent does not achieve a polymerization product having a sufficiently high difference between the minimum film formation temperature and the glass transition temperature that then the content of plasticizing substituent of this protective colloid should be increased. A skilled person can easily find out without undue experimentation how the substitution of a protective colloid has to be amended to make it suitable for carrying out the present invention.

It is known to use protective colloids in the emulsion polymerization process of ethylenically unsaturated polymers (e.g. US-A WO 96/14357). However, it was not known in the prior art that by selecting protective colloids which contain a sufficient amount of plasticizing substituent, a polymerization product can be obtained which has a sufficiently high difference between the minimum film formation temperature and the glass transition temperature to solve the problems which occur with the prior art compositions. Thus, in the prior art the protective colloids employed were not sufficiently substituted to achieve the very advantageous difference in the minimum film formation temperature and the glass transition temperature achieved according to the present invention.

Furthermore, if conventional protective colloids are used in the emulsion polymerization process, the difference between the glass transition temperature and the minimum film formation temperature in the resulting polymerized product is about the same as in a polymerized product which was produced without any protective colloid.

On the other hand, if in the emulsion polymerization process a protective colloid is used which has the proper substitution pattern (e.g. a cellulose derivative having a high degree of hydroxyethyl substitution), then the produced polymer product has a much higher difference between the glass transition temperature and the minimum film formation temperature than the polymer product produced without protective colloid.

According to one embodiment of the invention by employing suitably substituted protective colloids it is possible to increase the difference between the glass transition temperature and the minimum film formation temperature by 2 or more, preferably by 4 or more, more preferably by 6 or more, most preferably 8 or more:

$$(T_G - MFT)_p - (T_G - MFT)_{np} \geq 2°C \qquad (I)$$

$$\text{preferably} \geq 4°C$$

$$\text{more preferably} \geq 6°C$$

$$\text{most preferably} \geq 8°C$$

wherein

p = emulsion polymerized product produced with protective colloid

np = emulsion polymerized product produced without protective colloid

$T_G$ = glass transition temperature of the emulsion polymerized product

MFT = minimum film formation temperature of the emulsion polymerized product

Preferably, the protective colloids are polysaccharides, particularly cellulose derivatives.

The preferred polysaccharide protective colloid of the present invention is a water soluble cellulose ether which has been modified with ethylene oxide, methyl chloride, propylene oxide, monochloroacetic acid, etc., or mixtures thereof. Particularly preferred is hydroxyethylcellulose having a molar substitution (MS) of 3 to 7, more preferably 4 to 7, most preferably 4 to 6 and hydrophobically modified hydroxyethylcellulose having a molar substitution (MS) of 4 to 7, preferably 4 to 6.

Particularly preferred are furthermore some cellulose ethers, namely ethylhydroxyethylcellulose (EHEC), hydrophobically modified hydroxyethylcellulose, carboxymethylcellulose (CMC), methyl hydroxyethylcellulose (MHEC), methyl hydroxypropylcellulose (MHPC), hydroxypropylcellulose (HPC), sulfoethyl hydroxyethylcellulose (SHEC), sulfoethyl methylhydroxyethylcellulose (SMHEC), sulfoethyl hydroxypropylcellulose (SHPC), sulfoethyl methylhydroxypropylcellulose (SMHPC).

It is known to use cellulose derivatives as protective colloids for producing latex compositions (e.g. WO 96/14357). However, according to the present invention it was found that by adapting the molar substitution of these cellulose derivatives protective colloids can be achieved which, when used in an emulsion polymerization process together with ethylenically unsaturated monomers, result in a polymerization product having a very high difference between the glass transition temperature and the minimum film formation temperature. This effect could not have been expected from the prior art references cited above. It could further not have been expected that by using specifically substituted cellulose derivatives in the emulsion polymerization process of ethylenically unsaturated monomers, a polymerization product can be achieved which has a significantly increased difference between the glass transition temperature and the minimum film formation temperature.

Knowing from the present invention that the substitution of the cellulose derivatives can be adapted to solve the problem as defined above, a skilled person can easily select the proper substitution pattern for each protective colloid so that the required difference between glass transition temperature and minimum film formation temperature in the produced polymerization product can be achieved. In particular, if a hydroxyethylcellulose or an ethylhydroxyethylcellulose is used as a protective colloid according to the present invention, the hydroxyethyl molar substitution (MS) of these cellulose derivatives should be 3 or more, preferably 4 or more. If a hydrophobically modified hydroxyethylcellulose is employed as protective colloid according to the present invention, this cellulose derivative should have a hydroxyethyl molar substitution (MS) of 4 or more.

Due to the high difference between glass transition temperature and minimum film formation temperature, which can be achieved according to the present invention, latex compositions, in particular latex coating compositions, can be prepared which have lower contents of volatile components (VOCs).

While the latex coating compositions of the present invention can comprise an amount of a coalescing agent, a plasticizer and/or a cosolvent, like the latex coating compositions of the prior art, according to the present invention it is possible to significantly reduce the amount of coalescing agent, plasticizer or cosolvent which is necessary to successfully apply the latex coating composition. In a preferred embodiment, the latex coating compositions of the present invention do not contain any coalescing agent, plasticizer or cosolvent. By reducing the amount of coalescing agent, plasticizer and/or cosolvent, the content of VOCs in the latex can be significantly reduced.

The modified cellulose is preferably a hydroxyethylcellulose with high HE-MS (≥3). The HE-MS is defined as the average ethyleneoxide substituents per anhydroglucose molecule.

In contrast to the addition of glycols and modified glycols, including nonionic surfactants, the use of these new protective colloids does not lead to a decrease in the glass transition temperature of the latex polymer while the MFT is drastically lowered.

The protective colloids are preferably employed in an amount effective for stabilization of the latex system of the invention. In this context, an effective amount is the amount which serves to stabilize the latex system during the aqueous emulsion polymerization, and after completion of the polymerization.

Particularly, the protective colloid concentration in the emulsion polymerization process of the present invention can be varied over a wide range, with the upper limit being determined only by economical and practical considerations based on what properties are desired in the final product. It is preferred that the upper limit be about 5.0%, more preferably 3.5%, and most preferably about 2.5%, by weight on the total ethylenically unsaturated monomer content in the reaction mass. The preferred lower limit is about 0.005%. A more preferred lower limit is about 0,5%, with about 1% by weight, based on the total weight of the ethylenically unsaturated monomer content, being the most preferred lower limit.

The protective colloid of the invention can be used either alone or in combination with other protective colloids or surfactants.

Also, in accordance with this invention, the monomers that are used in this invention are at least one ethylenically unsaturated monomer such as vinyl esters or ethers, styrene, and others. The acrylates that are used in this invention are acrylic acid, methacrylic acid, butylacrylate, methyl methacrylate, and other acrylate or methacrylate esters. Also esters of maleic acid, like dibutylmaleate may be employed in this invention.

In general, any ethylenically unsaturated monomer, which optionally may be cyclic, which can be polymerized by free radical initiation can be used in the practice of this invention. Preferred ethylenically unsaturated monomers include those having up to 23 carbons.

Examples of suitable monomers include vinyl esters, vinyl ethers, vinyl and vinylidene halides, N-vinyl pyrrolidone, ethylene, $C_3$ or greater alpha-olefins, allyl amines, allyl esters of saturated monocarboxylic acids, and amides thereof and dienes and derivatives thereof.

Suitable vinyl esters include aliphatic vinyl esters, such as vinyl formate, vinyl acetate, vinyl propionate, vinyl butyrate, vinyl isobutyrate, vinyl valerate, vinyl capronate and vinyl versatate.

Typical vinyl ethers include methylvinyl ether, ethylvinyl ether and n-butylvinyl ether.

Suitable $C_3$ or greater alpha-olefins include propylene, 1-butene, 1-pentene, cyclopentene, 1-hexene, cyclohexene and 1-decene.

Allyl amine and N-substituted allyl amines are examples of typical allyl amines.

Suitable dienes are butadiene, cyclopentadiene, and dicyclopentadiene.

Suitable allyl esters of saturated monocarboxylic acids may include allyl acetate, allyl propionate and allyl lactate, and their amides, among others.

The polymers of the invention can be prepared from one or more of the ethylenically unsaturated monomers. In this regard, it is noted that by the term "polymer" it is also meant homopolymers, and copolymers that are polymerized with two or more different monomers.

The present invention is particularly useful for vinylacetate latex systems. Vinylacetate may be used as single monomer or in combination with other monomers like VeoVa (vinylversatate), ethylene butylacrylate or dibutylmaleate.

Preferably, the monomer composition is based on vinylacetate, which means that the monomer composition contains at least about 50% of vinylacetate. The polymerization products generally have a lower minimum film formation temperature in conjunction with no substantial decrease in the glass transition temperature, preferably with no decrease in the glass transition temperature at all compared to the glass transition temperature of the polymer if no protective colloid is added prior to the emulsion polymerization process. The final polymerized products have an unusually high difference between the glass transition temperature and the minimum film formation temperature. This manifests itself also in a higher resistance to blocking when compared to systems using coalescents to improve the film formation.

There are some latex compositions known in the prior art which have a lower minimum film formation temperature than glass transition temperature. However, this difference between the minimum film formation temperature and the glass transition temperature is significantly increased if the latex compositions are prepared according to the present invention. Thus, with the present invention it is possible to provide emulsion polymerization products having a higher difference between the glass transition temperature and the minimum film formation temperature than corresponding compositions of the prior art.

In particular, if the monomer composition employed in the emulsion polymerization process of the present invention is on the basis of vinylacetate (comprises at least 50% of vinylacetate) and contains as a comonomer at least 15% of vinylversatate, according to the present invention a difference between the glass transition temperature and the minimum film formation temperature can be achieved which is 10°C (preferably 15°C) or more. If the monomer composition is on the basis of vinylacetate (comprises at least 50% of vinylacetate) and contains as a comonomer at least 5% of ethylene, it is possible to achieve a difference between the glass transition temperature and the minimum film formation temperature which is 15°C (preferably 20°C) or more. If the monomer composition is on the basis of vinylacetate (comprises at least 50% of vinylacetate) and contains as a comonomer at least 5% of butylacrylate, ethylhexylacrylate and/or butylmethacrylate, it is possible to achieve differences between the glass transition temperature and the minimum film formation temperature of 15°C (preferably 20°C) or more.

In all other cases (all other monomer compositions including monomer compositions comprising vinylacetate and monomer compositions not comprising vinylacetate) the difference between the glass transition temperature and the minimum film formation temperature of the polymerized product is 5°C or more, more preferably 10°C or more, still more preferably 15°C or more and most preferably 20°C or more.

In a particularly preferred embodiment the invention provides the application of modified cellulose as protective colloid in the copolymerization of vinylacetate-vinylversatate, vinylacetate-ethylene and vinylacetate-butylacrylate.

Particularly preferred according to the present invention is a combination of a monomer composition on the basis of vinylacetate as defined above and a protective colloid which is a water soluble cellulose ether as defined above.

Polymers of the invention with relatively high glass transition temperature - e.g. about 50°C to about 150°C - can be characterized as "hard"; those with relatively low glass transition temperatures - about -100°C to about 0°C - can be characterized as "soft". A factor affecting the degree of hardness and softness is the identity of the ethylenically unsaturated monomers which are employed.

In accordance with the preferred use of the polymerization product of the present invention as latex coating composition which can be applied at low temperatures, the polymerization product has a glass transition temperature of preferably between 10°C and 100°C. In view of the blocking tendency of polymers with a low glass transition temperature, particularly preferred are glass transition temperatures between 15°C and 50°C. The minimum film formation temperature of the polymerized compositions of the present application are preferably between -10 and 20°C, more preferably between 0 and 15°C (of course, it is necessary that a reasonable difference between the glass transition temperature and the minimum film formation temperature is maintained).

Different use levels of the ethylenically unsaturated monomers contribute to hardness or softness in different degrees, and are thus known as "hard" and "soft" monomers. The relative hardness and softness of different monomers is known in the art. The degree of hardness and softness of a polymer is accordingly affected by the hardness or softness of the monomers comprising the polymer, and by the relative ratios of these monomers.

When making a copolymer latex system, the ratios of "hard" to "soft" monomer are chosen so that a continuous latex film is formed at use temperature.

Latices described in the present invention preferably form films at relatively low temperatures (<20°C). Vinyl-acrylates can be made in the ratio range of about 1:1 to about 10:1, preferably about 7:3 to about 9:1, by weight of vinylacetate/acrylate monomer. Vinylacetate-Vinylversatate latices can be made in the ratio range of about 1:1 to about 10:1, preferably about 6:4 to about 9:1, by weight of vinylacetate/vinylversatate monomer.

Anionic, cationic, nonionic and amphoteric surfactants and mixtures thereof known in the art may be used in the practice of this invention. Suitable surfactants include polyglycol ethers, sulfonated paraffin hydrocarbons, higher alkyl sulfates such as lauryl sulfate, alkali metal salts of fatty acids such as sodium stearate and sodium oleate, sulfuric acid esters of fatty alcohols, ethoxylated $C_{4-50}$ alkyl phenols and their sulfonation products, and also sulfosuccinic acid esters such as sodium dioctylsulfosuccinate; these surfactants or emulsifiers are optional and are not always required, but when they are used, they are present in amounts usually of from 0.1 to 0.5%, preferably 0.1 to 2.0%, by weight, based on the total amount of the ethylenically unsaturated monomers present in the process.

Any known methods of emulsion polymerization may be used, including batch, semi-batch, or continuous and thermal or redox techniques. Semi-batch monomer addition with either batch or continuous addition of the initiator or catalyst is preferred. The polymerization can also be carried out under high shear, meaning that, for example, a loop-reactor can be used for performing the polymerization. Preferably, an amount of from about 0% to about 40% - more preferably about 21% to about 25%, and most preferably from about 5% to about 15% - by weight of the ethylenically unsaturated monomer or monomers is added in the initial charge to the reactor. Also as a matter of preference, an amount of from 0% to about 60% - more preferably, about 50% to about 60% - by weight of the initiator is added in the initial charge to the reactor. The continuous addition of any reaction ingredient or ingredients is generally done over a period of from about 2 to about 5 hours. The batch or delayed initiator or catalyst addition may be used, although these variations are not necessary for the success of this invention.

Also multiple stages in the process can be employed, for instance for core-shell polymerization. With multiple stages is meant the sequential addition of different monomer mixtures.

In general, the monomers are polymerized by aqueous emulsion techniques at from about 20°C to about 120°C, preferably from about 45°C to about 95°C, in the presence of a free radical polymerization initiator, particularly a water soluble peroxide, e.g. hydrogen peroxide, persulfates such as potassium, sodium and ammonium persulfates or, in some cases, perborates. Other methods known in the art may also be used to polymerize monomers, such as, for example, by using redox polymerization catalyst systems, such as potassium persulfate and sodium bisulfite. The initiator is used at a concentration of 0.2 - 2.0% by weight based on the weight of the monomer(s), preferably in an amount of 0.3 - 1.0%.

The resulting product of the invention is a latex, comprising particles of the prepared polymer dispersed as a discontinuous phase in an aqueous continuous phase, and also including the protective colloid. The indicated particles preferably have an average size of less than abut 500 nanometers - more preferably less than about 300 nanometers.

Further, the latex of the present invention may be used in several applications, like water based inks, paper coatings, paper sizing, textiles, joint compounds, binders for non-woven material, paints, and (tile) adhesives. The invention is preferably used in coatings, where blocking certainly is an issue. The employment of this invention enables the preparation of paint without any need for solvents or coalescing agents.

The following examples are illustrative only and they do not limit the scope of the invention.

Examples

*Example 1. Vinylacetate / VeoVa 10® latex prepared with protective colloid marked D (Invention).*

This example illustrates one embodiment of the aqueous dispersions of this invention and how to prepare the same. The polymerizations were carried out in a 2 liter glass reaction vessel which was equipped with a thermocouple, a reflux condenser, a monomer inlet, an initiator inlet and a half moon shaped stirrer. The reaction vessel was charged with 460 grams of demineralized water, 0.8 grams of Disponil® SUS IC 680 (= dihexylsulfosuccinate, sodium salt ex Henkel), 3 grams of Atpol E 5720 (= ethoxylated alkanol, HLB 16.2 ex ICI), 1.6 grams of sodiumhydrogencarbonate and 12 grams of protective colloid marked D as mentioned in table 2. The reactor contents were allowed to stand overnight. After complete dissolution of the surfactants and protective colloid, the temperature was raised to 72°C by means of a waterbath. Next 5% of the monomer mixture (in total the monomer mixture comprises 450 grams Vinylacetate and 150 grams VeoVa 10® (vinyl ester of versatic acid, Shell trademark) was added to the reactor within one minute. After two minutes of equilibration, 25% of the initiator solution was evenly added in 60 seconds.

The initiator solution contained 2 grams of potassiumpersulfate in 60 grams water. As the temperature reached 72°C again, the addition of the remaining monomer mixture and initiator solution started. The metering rate of the monomer was 240 ml/hour (216 grams/hour) meaning that all monomer was gradually added in 2.5 - 3 hours time.

The initiator solution was given to the reactor over the same period. Monomer and initiator were dosed by means of a plunger pump and a peristaltic pump respectively. The reaction temperature was kept constant at 80°C - 82°C. The polymerization was terminated by keeping the temperature at 80°C for 1 hour after the addition of the initiator and monomer, followed by heating the latex to 90°C and the latex was kept at this temperature for 15 minutes. Hereafter the latices were cooled to room temperature. The stirring speed was 200 rpm during the reactions.

*Comparative Example A. Vinylacetate / VeoVa 10® latex prepared with protective colloid marked A (Comparison).*

The formulation and procedure were used as described in example 1, except for the protective colloid used. In this example the protective colloid used was the sample marked A in table 2.

*Comparative example B. Vinylacetate / VeoVa 10® latex prepared with protective colloid marked B (Comparison).*

The formulation and procedure were used as described in example 1, except for the protective colloid used. In this example the protective colloid used was the sample marked B in table 2.

*Comparative example C. Vinylacetate / VeoVa 10® latex prepared with protective colloid marked C (Comparison).*

The formulation and procedure were used as described in example 1, except for the protective colloid used. In this example the protective colloid used was the sample marked C in table 2.

*Example 2. Vinylacetate / VeoVa 10® latex prepared with protective colloid marked E (Invention).*

The formulation and procedure were used as described in example 1, except for the protective colloid used. In this example the protective colloid used was the sample marked E in table 2.

*Example 3. Vinylacetate / Ethylene latex prepared with protective colloid marked F (Invention)*

The polymerization was carried out in a 2 liter stainless steel reaction vessel that was equipped with a thermocouple, a monomer inlet, initiator inlet, and a stirrer. The reactor was charged with 452 grams demineralized water, 1.6 grams of sodium bicarbonate, 3.75 grams of Disponil SUS IC 680 (= dihexylsulfosuccinate, sodium salt ex Henkel), 4.6 grams of Disponil APE 257 (= mixture of ethoxylated linear fattyalcohols ex Henkel) and 12 grams of protective colloid marked F in table 2. After complete dissolution of the ingredients the temperature was raised to 80°C. Next, 15% of the initiator solution (2.5 grams potassium persulfate in 100 grams demineralized water) was evenly added in 30 seconds.

One minute later, the addition of the monomer and the rest of the initiator solution was started. 534 grams of vinylacetate were gradually added over a period of 120 minutes using a high pressure pump and keeping the ethylene pressure on the reaction vessel at 21 bars. The initiator was added over the same time as the monomer by means of a HPLC pump. The reaction temperature was kept at 80°C.

The polymerization was terminated by keeping the temperature at 80°C for 1 hour after the complete addition of monomer and initiator. Thereafter the latices were cooled to room temperature.

*Comparative example D. Vinylacetate / Ethylene latex prepared with protective colloid marked G (Comparison)*

The formulation and procedure were used as described in example 3, except for the protective colloid used. In this example the protective colloid used was the sample marked G in table 2.

*Example 4. Vinylacetate / Butylacrylate latex prepared with protective colloid marked H (Invention).*

This example illustrates one embodiment of the aqueous dispersions of this invention and how to prepare the same. The polymerizations were carried out in a 2 liter glass reaction vessel which was equipped with a thermocouple, a reflux condenser, a monomer inlet, an initiator inlet and a half moon shaped stirrer. The reaction vessel was charged with 420 grams of demineralized water, 13.7 grams of Disponil® MGS 156 (= mixture of surface active substances ex Henkel), 5 grams of Atpol E 5720 (= ethoxylated alkanol, HLB 16.2 ex ICI), 2.0 grams of sodiumhydrogencarbonate and 10 grams of protective colloid marked H as mentioned in table 2. The reactor contents were allowed to stand overnight. After complete dissolution of the surfactants and protective colloid, the temperature was raised to 80°C by means of a waterbath. Next 40% of the initiator solution was evenly added in 60 seconds. The initiator solution contained 2 grams of potassiumpersulfate in 50 grams water. As the temperature reached 80°C again, the addition of the monomer mixture (425 grams of vinylacetate and 75 grams of butylacrylate) and remaining initiator solution started. The metering rate of the monomer was 180 ml/hour meaning that all monomer was gradually added in 3 - 3.5 hours time. The initiator solution was given to the reactor over the same period. Monomer and initiator were dosed by means of a plunger pump and a peristaltic pump respectively. The reaction temperature was kept constant at 80°C - 82°C. The polymerization was terminated by keeping the temperature at 80°C for 1 hour after the addition of the initiator and monomer. Hereafter the latices were cooled to room temperature. The stirring speed was 200 rpm during the reactions.

*Comparative example E. Vinylacetate / VeoVa 10® latex prepared without protective colloid (Comparison).*

The formulation and procedure were used as described in example 1, except for the amount of surfactants used. In this comparative example 15 grams of Disponil SUS IC 680 and 12 grams of Atpol E 5720 were dissolved. No protective colloid was used.

*Example 5. Vinylacetate / VeoVa 10® latex prepared with protective colloid marked I (Invention).*

The formulation and procedure were used as described in example 1, except for the protective colloid used. In this example the protective colloid used was the sample marked I in table 2.

*Example 6. Vinylacetate / VeoVa 10® latex prepared with protective colloid marked J (Invention).*

The formulation and procedure were used as described in example 1, except for the protective colloid used. In this example the protective colloid used was the sample marked J in table 2.

*Example 7. Vinylacetate / Butylacrylate latex prepared by core-shell polymerization with protective colloid marked H (Invention), the protective colloid is used only in the shell.*

This example illustrates one embodiment of the aqueous dispersions of this invention and how to prepare the same. The comparison with example 8 and 9 shows that the MFT is lowest for latices having most colloid in the shell. Example 7 is a little different since there more anionic surfactant was used, which may account for the MFT of 10°C.
The polymerizations were carried out in a 2 liter glass reaction vessel which was equipped with a thermocouple, a reflux condenser, a monomer inlet, an initiator inlet and a half moon shaped stirrer. The reaction vessel was charged with 350 grams of demineralized water, 12.5 grams of Disponil® SUS IC 680 (= dihexylsulfosuccinate, sodium salt ex Henkel), 7.7 grams of Disponil APE 257 (= mixture of ethoxylated linear fatty alcohols ex Henkel), 2.0 grams of sodiumhydrogencarbonate.
The reactor contents were allowed to stand overnight. After complete dissolution of the surfactants and buffer, the temperature was raised to 80°C by means of a waterbath. Next 40% of the initiator solution was evenly added in 30 seconds. The initiator solution contained 2 grams of potassiumpersulfate in 50 grams water. As the temperature reached 80°C again, the addition of the monomer for the core (400 grams of vinylacetate) and remaining initiator solution started. The metering rate of the monomer was 180 ml/hour meaning that all monomer was gradually added in 3 - 3.5 hours time. The initiator solution was given to the reactor over the same period. Monomer and initiator were dosed by means of a plunger pump and a peristaltic pump respectively. The reaction temperature was kept constant at 80°C - 82°C. After all monomer for the core was added, 80 grams of a solution of protective colloid was dosed to the reactor. The solution contained 12.5% of protective colloid marked H in table 2 in demineralized water. Then the monomer forming the shell (100 grams of butylacrylate) was added by means of the plunger pump. After all the monomer was added, the polymerization was terminated by keeping the temperature at 80°C for 1 hour after the addition of the initiator and monomer. Hereafter the latices were cooled to room temperature. The stirring speed was 200 rpm during the reactions.

*Example 8.* *Vinylacetate / Butylacrylate latex prepared by core-shell polymerization with protective colloid marked H (Invention), the protective colloid is used in core as well as in the shell.*

This example illustrates one embodiment of the aqueous dispersions of this invention and how to prepare the same. The polymerizations were carried out in a 2 liter glass reaction vessel which was equipped with a thermocouple, a reflux condenser, a monomer inlet, an initiator inlet and a half moon shaped stirrer. The reaction vessel was charged with 359 grams of demineralized water, 6.25 grams of Disponil® SUS IC 680 (= dihexylsulfosuccinate, sodium salt ex Henkel), 7.7 grams of Disponil APE 257 (= mixture of ethoxylated linear fatty alcohols ex Henkel), 2.0 grams of sodiumhydrogencarbonate and 1.25 grams of protective colloid marked H in table 2.

The reactor contents were allowed to stand overnight. After complete dissolution of the surfactants and protective colloid, the temperature was raised to 80°C by means of a waterbath. Next 40% of the initiator solution was evenly added in 30 seconds. The initiator solution contained 2 grams of potassiumpersulfate in 50 grams water. As the temperature reached 80°C again, the addition of the monomer for the core (400 grams of vinylacetate) and remaining initiator solution started.

The metering rate of the monomer was 180 ml/hour meaning that all monomer was gradually added in 3 - 3.5 hours time. The initiator solution was given to the reactor over the same period. Monomer and initiator were dosed by means of a plunger pump and a peristaltic pump respectively. The reaction temperature was kept constant at 80°C - 82°C. After all monomer for the core was added, 70 grams of a solution of protective colloid was dosed to the reactor. The solution contained 12.5% of protective colloid marked H in table 2 in demineralized water. Then the monomer forming the shell (100 grams of butylacrylate) was added by means of the plunger pump. After all the monomer was added, the polymerization was terminated by keeping the temperature at 80°C for 1 hour after the addition of the initiator and monomer. Hereafter the latices were cooled to room temperature. The stirring speed was 200 rpm during the reactions.

*Example 9.* *Vinylacetate / Butylacrylate latex prepared by core-shell polymerization with protective colloid marked H (Invention), the protective colloid is used in core as well as in the shell.*

The formulation and reaction procedure were used as described in example 8, except for the following changes.

Instead of 359 grams of demineralized water, the surfactants and colloid were dissolved in 387.5 grams of water. Of the protective colloid marked H, 2.5 grams were used to stabilize the core, and subsequently the amount used for the shell was in this case 60 grams of a 12.5% solution.

Table 2:

| Definition of the protective colloids used in the examples and comparative examples | | | | |
|---|---|---|---|---|
| Ex. | Protective colloid | HE-MS of prot. colloid | Mol. weight (approx.) of prot. colloid | |
| 1 | D (HEC) | 5.69 | 2,000,000 | (invention) |
| 2 | E (HEC) | 4.62 | 2,000,000 | (invention) |
| 5 | I (CMHEC, CMDS = 0.05) | 5.52 | 250,000 | (invention) |
| 6 | J (MHEC, MDS = 1.38) | 0.22 | 300,000 | (invention) |
| A | A (HEC) | 3.12 | 2,000,000 | (comparison) |
| B | B (HEC) | 3.04 | 700,000 | (comparison) |
| C | C (HEC) | 3.03 | 1,000,000 | (comparison) |
| E | none | - | | (comparison) |
| 3 | F (HEC) | 3.50 | 180,000 | (invention) |
| D | G (HEC) | 2.07 | 150,000 | (comparison) |
| 4 | H (HEC) | 5.60 | 250,000 | (invention) |
| 7 | H (100% in shell) | 5.60 | 250,000 | (invention) |
| 8 | H (12.5% in core, 87.5% in shell) | 5.60 | 250,000 | (invention) |

Table 2:   (continued)

| | Definition of the protective colloids used in the examples and comparative examples | | | |
|---|---|---|---|---|
| Ex. | Protective colloid | HE-MS of prot. colloid | Mol. weight (approx.) of prot. colloid | |
| 9 | H (25% in core, 75% in shell) | 5.60 | 250,000 | (invention) |

Table 3:

| | Analysis of latices stabilized with protective colloids as mentioned in table 2. | | | | | | |
|---|---|---|---|---|---|---|---|
| Example | solids (%) | grit (ppm) | Pn (nm) | gloss (% refl.) | MFT (°C) | Tg (°C) | Tg-MFT |
| latex system = Vinylacetate / Vinylversatate (VeoVa 10®) | | | | | | | |
| 1 | 51.9 | 100 | 330 | 78 | 7.1 | 18.9 | 16.4 |
| 2 | 51.7 | 85 | 400 | 75 | 8.5 | 21.3 | 12.8 |
| 5 | 51.9 | 70 | 320 | 70 | 5.3 | 23 | 17.7 |
| 6 | 52.8 | 140 | 510 | 45 | 8.5 | 26 | 17.5 |
| A | 51.6 | 60 | 320 | 80 | 10.4 | 18.0 | 7.6 |
| B | 52.3 | 200 | 400 | 77 | 10.1 | 18.5 | 8.4 |
| C | 52.1 | 120 | 420 | 74 | 10.6 | n.d. | n.d. |
| E | 52.2 | 90 | 220 | - | 16 | 24.4 | 8.4 |
| latex system = Vinylacetate / Ethylene | | | | | | | |
| 3 | 48.7 | 190 | 220 | 82 | 1 | 24.1 | 23.1 |
| D | 44.5 | 90 | 200 | 81 | 3.1 | 17.5 | 14.4 |
| latex system = Vinylacetate / Butylacrylate | | | | | | | |
| 4 | 50.9 | 100 | 950 | 58 | 12.3 | 28 | 15.7 |
| 7 | 49.3 | 130 | 1430 | 44 | 10 | 36.3 | 26.3 |
| 8 | 48.5 | 60 | 3110 | 22 | 9.5 | 36.8 | 27.3 |
| 9 | 48.7 | 80 | 2560 | 73 | 12.7 | 35.7 | 23 |

n.d. = not determined;

- = film contracts

Determination of properties:

Film gloss was determined with a Byk gloss meter at 60° angle of a latex film dried at 23°C for 24 hours. Particle size was determined with a Joyce Loebl Disc centrifuge. Grit formation was measured by sieving the latex over a 200# sieve and weighing the amount of grit remaining at the sieve. Solids content was determined gravimetrically after drying the latex at 120°C.

The MFT and Tg were both determined by DSC, using a heating rate of 20°C/min. For the determination of the minimum film formation temperature the latex was used as such and a sample was scanned with a heating rate of 20°C from -20°C to 70°C. After cooling the sample to -20°C this heating cycle was repeated. The minimum film formation temperature was determined as the average of the two midpoint glass transition temperatures of the polymer in wet condition.

For determining the glass transition temperature a latex sample was dried at 60°C in an oven over night and subsequently scanned from -20°C to 100°C, again with a scanning rate of 20°C/min. Also this test was duplicated. The glass transition temperature was calculated from the average glass transition temperature in the two scans. In all the cases nitrogen was used to purge the DSC instrument.

**Claims**

1. An emulsion polymerization process comprising polymerizing a monomer composition on the basis of ethylenically unsaturated monomers in the presence of water and of at least one protective colloid, characterized in that the protective colloid is selected such that the product of the emulsion polymerization meets the following relationship, formula (I):

$$(T_G - MFT)_p - (T_G - MFT)_{np} \geq 2°C \tag{I}$$

   wherein

   p = emulsion polymerized product produced with protective colloid

   np = emulsion polymerized product produced without protective colloid

   $T_G$ = glass transition temperature of the polymerized product

   MFT = minimum film formation temperature of the polymerized product

2. An emulsion polymerization process comprising polymerizing a monomer composition on the basis of ethylenically unsaturated monomers in the presence of water and of at least one protective colloid, characterized in that the protective colloid is selected such that the difference between the minimum film formation temperature and the glass transition temperature of the product of the emulsion polymerization is

   10°C or more, if the monomer composition comprises at least 50% of vinylacetate and at least 15% of vinylversatate
   15°C or more, if the monomer composition comprises at least 50% of vinylacetate and at least 5% of ethylene, and
   15°C or more, if the monomer composition comprises at least 50% of vinylacetate and at least 5% of butylacrylate, ethylhexylacrylate and/or butyl-methacrylate and
   5°C or more for all other monomer compositions.

3. An emulsion polymerization process according to claim 1 or 2, wherein the protective colloid is selected from the group consisting of hydroxyethylcellulose, ethylhydroxyethylcellulose, hydrophobically modified hydroxyethylcellulose, carboxymethylcellulose, carboxymethyl hydroxyethylcellulose, methyl hydroxypropylcellulose, methyl hydroxyethylcellulose, methylcellulose, sulfo-ethylated hydroxyethylcellulose, hydroxypropyl-hydroxyethylcellulose and sulfo-ethylated carboxymethylcellulose and mixtures of these protective colloids.

4. An emulsion polymerization process according to any of claims 1 to 3, wherein the polymerization is carried out in two subsequent stages to form a core-shell polymer and wherein the protective colloid is present in at least one of the two stages.

5. An emulsion polymerization process of any of claims 1 to 4, wherein the ethylenically unsaturated monomer is selected from the group consisting of acrylic acid, methacrylic acid, butylacrylate, methylmethacrylate, acrylic esters, styrene vinylethers, ethylene, vinylacetate, vinyl esters, vinyl esters of versatic acid, vinylidene halides, N-vinylpyrrolidone, C3 or greater alfa-olefins, allyl amines, allyl esters of saturated monocarboxylic acids and amides thereof, propylene, 1-butene, 1-pentene, 1-hexene, 1-decene, allyl amines, allyl acetate, allyl propionate, allyl lactate, their imides, and derivatives thereof.

6. An emulsion polymerization process according to any of claims 3 to 5, wherein the hydroxyethylcellulose has a hydroxyethyl molar substitution (MS) of greater than 3, the ethylhydroxyethylcellulose has a hydroxyethyl molar substitution (MS) of greater than 3 and the hydrophobically modified hydroxyethylcellulose has a hydroxyethyl molar substitution (MS) of greater than 4.

7. An emulsion polymerization process according to claim 5 or 6, wherein the monomer composition on the basis of ethylenically unsaturated monomers is a monomer composition on the basis of vinylacetate and optionally one or more comonomers.

8. An emulsion polymerization process according to claim 7, in which the monomer composition contains 50% vinylacetate or more.

9. An emulsion polymerization process according to claim 8, wherein the composition contains vinylversatate, butylacrylate and/or ethylene as a comonomer.

10. An emulsion polymerization process of any of claims 1 to 9, wherein the protective colloid has a molecular weight ($M_w$) of 1,500,000 or less.

11. The emulsion polymerization process of claim 10, wherein the protective colloid has a molecular weight ($M_w$) of 900,000 or less.

12. The emulsion polymerization process of claim 11, wherein the protective colloid has a molecular weight ($M_w$) of 300,000 or less.

13. The emulsion polymerization process according to any of claims 1 to 12, wherein the protective colloid has a molecular weight ($M_w$) of 10,000 or more.

14. The emulsion polymerization process according to claim 13, wherein the protective colloid has a molecular weight ($M_w$) of 50,000 or more.

15. The emulsion polymerization process according to claim 14, wherein the protective colloid has a molecular weight ($M_w$) of 80,000 or more.

16. The emulsion polymerization process according to claim 15, wherein the protective colloid has a molecular weight ($M_w$) of 100,000 or more.

17. The emulsion polymerization process according to any of claims 3 to 16, wherein the degree of hydroxyethyl molecular substitution (MS) of the hydroxyethylcellulose, the ethylhydroxyethylcellulose and the hydrophobically modified hydroxyethylcellulose is 7 or less.

18. Polymerization product obtainable according to the emulsion polymerization process of any of claims 1 to 17.

19. A latex composition comprising the polymerization product according to claim 18.

20. A latex composition according to claim 19, which is a latex coating composition.

21. A latex coating composition according to claim 20, which is free of coalescing agent.

22. A latex coating composition according claim 20 or 21, which is free of plasticizer.

23. A latex coating composition according to any of claims 20 to 22, which is free of cosolvent.

24. A latex coating composition according to any of claims 20 to 23, wherein the composition is a gloss paint with a pigment volume concentration of 50% or less.

25. A latex coating composition according to any of claims 20 to 23, wherein the composition is a flat paint with a pigment volume concentration of 50% or more.

26. Product coated with a latex coating composition according to any of claims 20 to 25.

EP 0 965 598 A1

| | European Patent Office | EUROPEAN SEARCH REPORT | Application Number EP 98 11 1077 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | WO 96 14357 A (HERCULES INC.) 17 May 1996 ----- | | C08F2/24 C09D157/00 |
| | | | **TECHNICAL FIELDS SEARCHED (Int.Cl.6)** |
| | | | C08F |

The present search report has been drawn up for all claims

| Place of search | Date of completion of the search | Examiner |
|---|---|---|
| THE HAGUE | 30 September 1998 | Cauwenberg, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 98 11 1077

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-1998

| Patent document cited in search report | | Publication date | Patent family member(s) | | Publication date |
|---|---|---|---|---|---|
| WO 9614357 | A | 17-05-1996 | AU | 3998595 A | 31-05-1996 |
| | | | BR | 9509581 A | 23-12-1997 |
| | | | CA | 2204242 A | 17-05-1996 |
| | | | CZ | 9701338 A | 15-10-1997 |
| | | | EP | 0789725 A | 20-08-1997 |
| | | | HU | 77335 A | 30-03-1998 |
| | | | JP | 10508632 T | 25-08-1998 |
| | | | NO | 972015 A | 23-06-1997 |
| | | | PL | 319938 A | 01-09-1997 |
| | | | US | 5795928 A | 18-08-1998 |

For more details about this annex : see Official Journal of the European Patent Office. No. 12/82

17